# FASCICULE DE BREVET EUROPEEN

(11) **EP 0 780 582 B1**
(45) Date de publication et mention de la délivrance du brevet: **15.03.2000**
(21) Numéro de dépôt: 96402774.2
(22) Date de dépôt: 17.12.1996
(51) Int. Cl.: F16B 5/06

(54) **Dispositif de fixation ou d'obturation automatique à fonctionnement par passage de point mort**
Befestigungs- oder Verschlussvorrichtung mit Überschreitung eines toten Punktes
Fastening (or closing) device working by passing the dead point

(30) Priorité: 19.12.1995 FR 9515080
(43) Date de publication de la demande: 25.06.1997
(73) Titulaire: RAPID S.A., F-75017 Paris (FR)
(72) Inventeur: Leon, Jean-Pierre, 78800 Houilles (FR); Vigoroux, Philippe, 78700 Conflans Sainte Honorine (FR)
(74) Mandataire: Beauchamps, Georges

(56) Documents cités:
- DE-A- 3 517 620
- GB-A- 2 168 419
- US-A- 3 651 734

## Description

La présente invention a essentiellement pour objet un dispositif de fixation ou d'obturation automatique à fonctionnement par passage de point mort.

On connaît déjà des dispositifs de fixation formant une pièce unique constituée par une embase sur laquelle sont articulées deux pattes de fixation opposées (US 3 651 734 A).

Les pattes, sous l'effet d'une pression, peuvent prendre une position rapprochée ou éloignée l'une de l'autre avec passage de point mort entre ces deux positions.

Ce genre de dispositif était généralement utilisé pour fixer sur un support des câbles électriques qui étaient en quelque sorte enfermés entre les deux pattes rapprochées l'une de l'autre sous l'effet d'une pression exercée sur l'embase, étant entendu que ladite embase était fixée sur ledit support.

La présente invention concerne un dispositif du genre ci-dessus mais qui a une structure particulière telle qu'elle permet un verrouillage instantané et en aveugle d'une pièce plus ou moins fermée telle que par exemple un boîtier sur un support.

A cet effet, l'invention a pour objet un dispositif de fixation ou d'obturation automatique formant une pièce unique constituée par une embase sur laquelle sont articulées au moins deux pattes de fixation opposées qui, sous l'effet d'une pression, peuvent prendre une position rapprochée ou éloignée l'une de l'autre avec passage de point mort entre ces deux positions, caractérisé en ce que chaque patte est reliée par une première charnière à une languette arquée elle-même articulée sur l'embase, et par une deuxième charnière à un élément solidaire de l'embase.

Suivant une autre caractéristique de ce dispositif, la première et la deuxième charnière précitées relient une extrémité de chaque patte respectivement à une extrémité d'une languette arquée et à une extrémité de l'élément précité qui fait saillie de l'embase et s'étend entre les deux languettes arquées.

Ce dispositif est encore caractérisé en ce que l'extrémité précitée des languettes arquées comporte une partie en saillie vers l'extérieur du dispositif pour constituer un point d'appui permettant aux pattes de prendre une position éloignée l'une de l'autre ou ouverte de verrouillage.

On précisera encore ici que les languettes arquées précitées présentent une concavité tournée du côté extérieur au dispositif.

Ce dernier est encore caractérisé en ce que la première et la deuxième charnière précitées prennent naissance à l'extrémité précitée des deux pattes respectivement sur l'une et l'autre face de chacune des pattes.

Selon encore une autre caractéristique de ce dispositif, chaque patte présente sensiblement la forme d'un S dont la partie arquée supérieure est intérieurement munie d'une nervure et se prolonge extérieurement par au moins un doigt de guidage s'étendant en vis-à-vis de la partie arquée inférieure du S.

On précisera ici que la nervure d'une patte peut comporter un bec coopérant avec une encoche dans la nervure de l'autre patte.

Suivant un autre mode de réalisation, chaque patte se prolonge extérieurement par un doigt de guidage comportant à son extrémité un retour en forme de crochet constituant un point d'appui permettant auxdites pattes de prendre une position ouverte de verrouillage.

Dans ce cas, les languettes arquées précitées peuvent comporter chacune au niveau de leur articulation sur l'embase un crochet ou analogue susceptible de coopérer avec le retour précité en forme de crochet pour verrouiller les pattes en position ouverte.

Selon encore une autre caractéristique, l'embase comporte sur son côté opposé à celui portant les languettes arquées, les pattes et l'élément précité, un ergot ou analogue avec languettes de clippage.

Suivant une autre caractéristique de cette invention, l'embase possède à l'état libre une forme arquée de préférence.

Selon encore une autre caractéristique, à l'embase précitée, est adjacente au moins une jupe d'étanchéité tournée vers une extrémité ou l'autre du dispositif.

Ainsi, le dispositif pourra d'un côté, être fixé de façon étanche par clippage sur un support, et de l'autre côté, être fixé, par les pattes précitées, en aveugle, sur une pièce en forme de boîtier ou analogue.

Cela étant, l'ergot avec languettes de clippage pourra être omis, de sorte que l'embase constituera tout simplement un obturateur de l'orifice de la pièce dans laquelle sera monté en aveugle le dispositif selon cette invention.

Mais d'autres avantages et caractéristiques de l'invention apparaîtront mieux dans la description détaillée qui suit et se réfère aux dessins annexés, donnés uniquement à titre d'exemple, et dans lesquels :
- la figure 1 est une vue de côté et en élévation d'un dispositif selon cette invention, en position de repos ;
- la figure 2 est une vue en élévation et coupe axiale de ce dispositif en position clippée sur un support et en position de début d'introduction des pattes dans une pièce formant boîtier ou analogue ;
- la figure 3 est une vue similaire à la figure 2, mais montrant les pattes du dispositif en position complètement introduite dans le boîtier ;
- la figure 4 est une vue similaire aux figures 2 et 3, mais montrant le dispositif après qu'une pression ait été exercée sur le boîtier pour ainsi provoquer un éloignement des deux pattes l'une de l'autre ;
- la figure 5 est une vue analogue à la figure 4, mais montrant le support et le boîtier en position assemblée, après que les pattes aient franchi la position de point mort pour ainsi prendre appui sur une paroi du boîtier qui est par conséquent solidarisé du support ;
- la figure 6 est une vue similaire à la figure 1, mais montrant un autre mode de réalisation du dispositif selon cette invention ;
- les figures 7 et 8 sont des vues similaires à la figure 6 mais montrant le dispositif équipé d'une jupe d'étanchéité adjacente à l'embase, cette jupe étant tournée vers l'une ou l'autre des extrémités du dispositif ; et
- les figures 9, 10 et 11 illustrent en élévation trois étapes successives du montage du dispositif représenté sur la figure 6 dans l'orifice d'une paroi vue en coupe et appartenant à une pièce quelconque, telle que par exemple un boîtier.

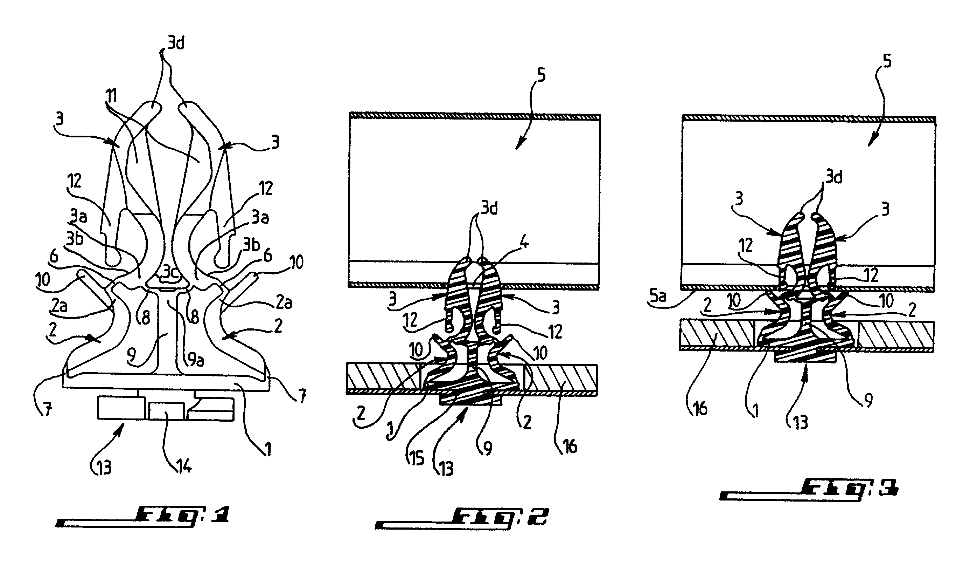

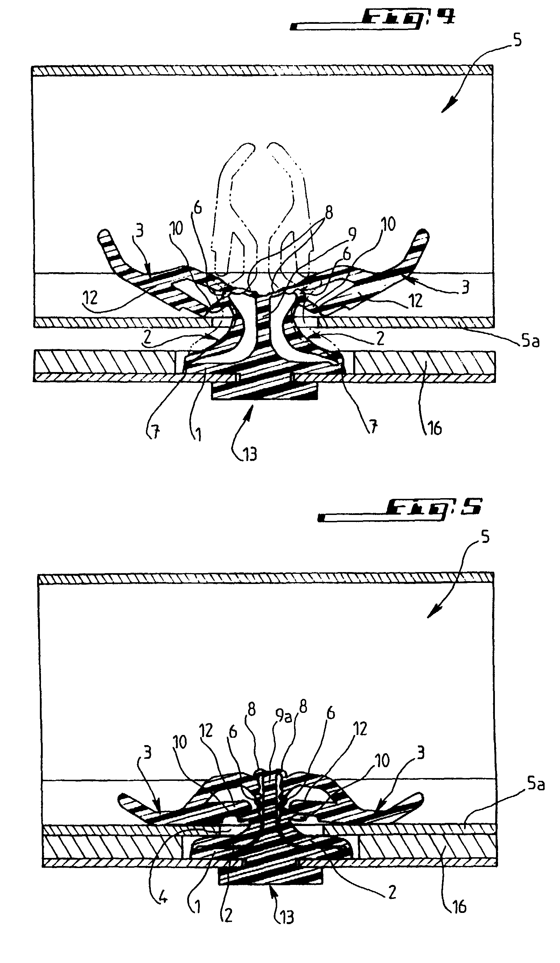

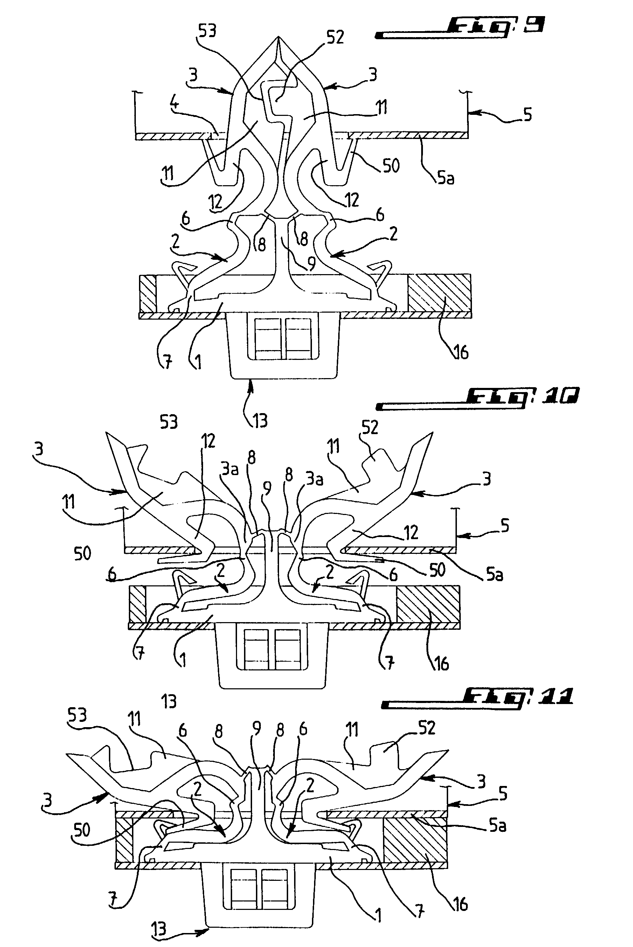

En se reportant plus particulièrement aux figures 1 et 6, on voit qu'un dispositif conforme à cette invention constitue une pièce unique, par exemple en matière plastique moulée, cette pièce unique comprenant essentiellement une embase 1 sur un côté de laquelle sont prévues deux languettes arquées 2 en vis-à-vis et à concavité tournée vers l'extérieur, et deux pattes 3 en vis-à-vis elles aussi et présentant chacune un profil en forme d'ogive de façon qu'elles puissent être introduites aisément dans l'orifice 4 d'une pièce 5 visible sur les figures 2 a 5 et 9 à 11, et présentant par exemple la forme d'une enveloppe plus ou moins fermée ou d'un boîtier.

Revenant aux figures 1 et 6, on voit que chaque patte 3 est reliée par une première charnière 6 à une languette arquée 2 qui est elle-même reliée à l'embase 1 par une articulation 7.

Chaque patte 3 est encore reliée par une deuxième charnière 8 à un élément 9 en forme d'âme qui est solidaire de l'embase 1 et s'étend entre les deux languettes arquées 2.

Plus précisément, la première charnière 6 et la deuxième charnière 8 relient une extrémité inférieure 3a de chaque patte 3 respectivement à une extrémité supérieure 2a d'une languette arquée 2 et à l'extrémité libre 9a de l'élément 9 en forme d'âme qui s'étend entre les languettes arquées 2.

On observera ici que les charnières 6 et 8, ainsi que les articulations 7 sont tout simplement constituées par une partie amincie de matière plastique, comme cela est connu en soi dans la technique.

Comme on le voit sur les figures 1 à 5, l'extrémité supérieure 2a des languettes arquées 2 comporte une partie 10 en saillie vers l'extérieur pour constituer, comme on le décrira plus loin à propos du fonctionnement, un point d'appui permettant aux pattes 3 de prendre une position éloignée l'une de l'autre ou ouverte de verrouillage.

Revenant aux deux charnières 6, 8 associées à l'extrémité inférieure 3a de chaque patte 3, on voit que la première charnière 6 prend naissance sur la face extérieure 3b de chaque patte 3, tandis que la deuxième charnière 8 prend naissance sur la face intérieure 3c de chaque patte 3.

Comme dit précédemment, chaque patte 3 présente une forme générale d'ogive, c'est-à-dire plus précisément la forme d'un S.

La partie arquée supérieure du S, constituant l'extrémité libre 3d de chaque patte 3 est intérieurement munie d'une nervure 11. Cette partie supérieure arquée se prolonge, en quelque sorte, vers l'extérieur par un doigt de guidage 12 qui s'étend en vis-à-vis de la partie arquée inférieure du S. Le doigt 12 des pattes 3 aura par conséquent un rôle de guidage à l'introduction des pattes 3 dans l'orifice 4 de l'enveloppe ou pièce en forme de boîtier 5 comme on le décrira ultérieurement.

On a montré en 13 un ergot ou analogue avec languettes de clippage 14, qui vient de moulage avec l'embase 1 de l'autre côté de cette embase, c'est-à-dire du côté opposé à celui portant les languettes arquées 2, l'élément en forme d'âme 9 et les pattes 3.

Cet ergot ou analogue peut parfaitement être omis, sans sortir du cadre de l'invention, de sorte que l'embase 1 jouera alors le rôle d'un simple obturateur.

Mais, pour une meilleure compréhension de l'invention, on expliquera ci-après en détail le fonctionnement du dispositif représenté sur la figure 1, en se reportant successivement aux figures 2 à 5.

En se reportant tout d'abord à la figure 2, on voit que le dispositif selon cette invention est monté par clippage, grâce à l'ergot 13, dans l'orifice 15 d'un support 16. L'extrémité libre 3d des pattes 3 est alors introduite dans l'orifice 4 ménagé dans la pièce 5 en forme de boîtier ou d'enveloppe plus ou moins fermée et constituant par exemple un canal.

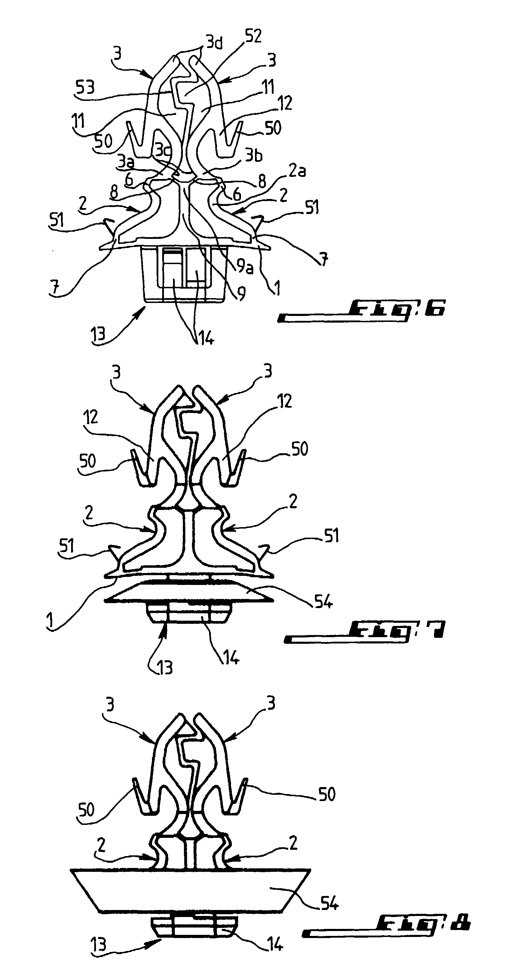

Ensuite, comme on le voit sur la figure 3, par rapprochement du support 16 et de la pièce 5, les pattes 3 pénètrent complètement à l'intérieur de la pièce 5 en étant guidées par le doigt 12 associé à chaque patte 3. A ce stade, les pattes 3 demeurent sensiblement verticales et immobiles l'une par rapport à l'autre. On observera ici que la pièce 5 repose par sa paroi 5a sur les parties en saillie 10 appartenant respectivement aux deux languettes arquées 2.

En continuant, par pression, à rapprocher la pièce 5 du support 16, et comme on le voit bien sur la figure 4, la paroi 5a de la pièce 5 prend appui sur les parties en saillie 10, ce qui va provoquer l'éloignement des pattes 3 l'une de l'autre jusqu'à une position de point mort au-delà de laquelle les pattes 3 prendront automatiquement la position visible sur la figure 5, c'est-à-dire une position totalement ouverte ou de verrouillage de la pièce 5 sur le support 16.

Il convient de préciser ici que le passage de point mort est réalisé par la combinaison et la géométrie particulières des éléments suivants : extrémité inférieure 3a des pattes 3, charnières 6, 7 et 8, et extrémité supérieure 2a des languettes arquées 2.

Dans la position visible sur la figure 5, les pattes 3 rabaissées exerceront avantageusement une pression sur la paroi 5a de la pièce 5 qui sera ainsi bien solidarisée du support 16. Ceci signifie que si par exemple des câbles électriques passent dans la pièce 5 qui aura donc dans ce cas la forme d'un canal, ces câbles formeront un faisceau qui sera solidement retenu sur le support 16 lequel peut être un organe quelconque.

Comme expliqué plus haut, l'ergot 13 de clippage peut parfaitement être omis, bien que cela ne soit pas représenté.

Dans ce cas, l'embase 1 constituera un obturateur ou un bouchon. C'est dire qu'il n'y aura pas fixation du dispositif sur un support tel que 16, mais que ce dispositif sera tout simplement inséré dans un orifice tel que 4 appartenant à une pièce telle que 5 pour obturer tout simplement ledit orifice 4, comme on peut le comprendre en se reportant encore à la figure 5 dans laquelle le support 16 et l'ergot 13 seraient omis.

On se reportera maintenant aux figures 6 à 8 illustrant un autre mode de réalisation de l'invention pour lequel on a utilisé les mêmes repères que ceux de la figure 1 pour désigner les éléments communs.

Ici, le doigt de guidage 12 des pattes 3 comporte, à son extrémité libre, une partie ou un retour en forme de crochet 50 qui constitue un point d'appui pour les pattes 3, à l'insertion dans l'orifice 4 de la pièce 5, comme on l'expliquera en détail plus loin.

Comme on le voit encore sur la figure 6, les languettes arquées 2, bien que cela ne soit pas obligatoire, peuvent comporter, au niveau de leur articulation 7 sur l'embase 1, un crochet ou analogue 51 qui s'étend vers l'extérieur. Un tel crochet 51 peut coopérer avec le retour en forme de crochet 50, une fois que le dispositif aura été inséré totalement dans l'orifice 4 ce qui aura provoqué, comme expliqué précédemment, l'ouverture complète des pattes 3, et le rabattement des retours en forme de crochet 50, en direction des crochets 51.

On voit encore sur la figure 6 que, comme expliqué précédemment, chaque patte 3 comporte à sa partie supérieure une nervure 11, l'une de ces nervures comportant ici un bec 52 qui coopère avec une encoche 53 ménagée dans la nervure de l'autre patte. L'encoche 53 et le bec 52 pourraient également parfaitement être prévus dans le mode de réalisation de la figure 1. Un tel système permet une coopération positive des pattes 3 lors de leur introduction dans l'orifice 4 de la pièce 5, de sorte qu'on évite ainsi un déplacement relatif ou une courbure excessive des pattes 3 lors de leur introduction dans l'orifice 4 de la pièce 5.

On voit sur les figures 6, 7 et 8 que l'embase 1 présente ici une forme arquée, c'est-à-dire légèrement concave du côté de l'ergot 13 de clippage. Ainsi, lorsque l'ergot de clippage 13 sera monté dans l'orifice 15 du support 16, comme on le voit bien sur les figures 9 à 11, la déformation et la mise à plat de l'embase 1 provoquera avantageusement un rapprochement des pattes 3 l'une vers l'autre, ce qui facilitera l'introduction de ces pattes dans l'orifice 4 de la pièce 5. Une telle embase arquée 1 peut bien entendu être prévue dans la réalisation visible sur la figure 1.

On a montré en 54, sur les figures 7 et 8 une jupe souple solidaire de l'ergot de clippage 13 et adjacente à l'embase 1. Cette jupe souple 54 peut être tournée soit du côté de l'ergot 13 (figure 7), soit du côté de l'embase 1 (figure 8), et elle participera avantageusement à l'étanchéité de l'assemblage au niveau soit de l'orifice 15 du support 16, soit au niveau de l'orifice 4 de la pièce ou boîtier 5.

Bien entendu, une telle jupe d'étanchéité 54 pourra être prévue dans le mode de réalisation décrit précédemment et illustré par la figure 1.

Le fonctionnement du mode de réalisation de la figure 6 qui vient d'être décrit sera maintenant brièvement expliqué en se reportant aux figures 9 à 11.

Comme on le voit sur la figure 9, les pattes 3 sont introduites dans l'orifice 4 de la paroi 5a appartenant à la pièce 5, jusqu'à ce que ladite paroi 5a trouve appui sur les parties ou retours en forme de crochet 50.

En poursuivant l'introduction des pattes 3, la paroi 5a, en forçant sur les crochets 50 provoque l'éloignement des pattes 3 jusqu'à ce que les crochets 50 prennent sensiblement la position horizontale visible sur la figure 10.

A ce stade, il est important de remarquer que les bords de l'orifice 4 procurent un effet de tenaille sur l'extrémité inférieure 3a des pattes 3 qui, à ce niveau, se rapprochent quelque peu, de sorte qu'en poursuivant la pénétration dans l'orifice 4, et en franchissant le passage de point mort, les pattes 3 seront éloignées l'une de l'autre brusquement et avec une certaine force jusqu'à ce qu'elles s'appliquent, en position totalement ouverte, sur la paroi 5a, comme on le voit sur la figure 11. On observera ici que les pattes 3, à ce stade, exerceront un effet de serrage sur la paroi 5a de la pièce 5.

En outre, comme on le voit bien sur la figure 11, les crochets 50 sont rabattus du côté de l'embase 1 et coopèrent avec les crochets 51, de manière à assurer un verrouillage positif de l'ensemble qui, en s'ajoutant au serrage précité, peut donc assurer une parfaite solidarisation du support 16 et de la pièce 5.

On a donc réalisé suivant l'invention, un dispositif de fixation ou d'obturation automatique à fonctionnement par passage de point mort pour permettre à au moins deux pattes de réaliser l'assemblage en aveugle de deux pièces par écartement de ces pattes l'une de l'autre, ce dispositif constituant avantageusement une pièce unique de préférence moulée en matière plastique qui est peu coûteuse et d'un fonctionnement remarquablement fiable.

Bien entendu, l'invention n'est nullement limitée aux modes de réalisation décrits et illustrés qui n'ont été donnés qu'à titre d'exemple.

C'est ainsi que l'ergot 13 avec ses languettes de clippage 14 peut revêtir une forme appropriée quelconque pour montage par clippage ou même par rotation, de même que la forme des trous dans les pièces à assembler peut être quelconque. Egalement, les modalités de montage et de démontage du dispositif de l'invention peuvent être quelconques et sont fonction des pièces à assembler.

C'est dire que l'invention comprend tous les équivalents techniques des moyens décrits ainsi que leurs combinaisons si celles-ci sont effectuées suivant les revendications.

## Revendications

1. Dispositif de fixation ou d'obturation automatique formant une pièce unique constituée par une embase (1) sur laquelle sont articulées au moins deux pattes de fixation opposées (3) qui, sous l'effet d'une pression, peuvent prendre une position rapprochée ou éloignée l'une de l'autre avec passage de point mort entre ces deux positions, caractérisé en ce que chaque patte (3) est reliée par une première charnière (6) à une languette arquée (2) elle-même articulée (7) sur l'embase (1), et par une deuxième charnière (8) à un élément (9) solidaire de l'embase (1).

2. Dispositif selon la revendication 1, caractérisé en ce que la première et la deuxième charnière précitées (6,8) relient une extrémité (3a) de chaque patte (3) respectivement à une extrémité (2a) d'une languette arquée (2) et à une extrémité (9a) de l'élément précité (9) qui s'étend entre les deux languettes arquées (2).

3. Dispositif selon la revendication 1 ou 2, caractérisé en ce que l'extrémité précitée (2a) des languettes arquées (2) comporte une partie (10) en saillie vers l'extérieur du dispositif pour constituer un point d'appui permettant aux pattes (3) de prendre une position éloignée l'une de l'autre ou ouverte de verrouillage.

4. Dispositif selon l'une des revendications 1 à 3, caractérisé en ce que les languettes arquées précitées (2) présentent une concavité tournée vers l'extérieur du dispositif.

5. Dispositif selon l'une des revendications précédentes, caractérisé en ce que la première et la deuxième charnière précitées (6, 8) prennent naissance à l'extrémité précitée (3a) des deux pattes (3) respectivement sur l'une (3b) et l'autre face (3c) de chacune des pattes (3).

6. Dispositif selon l'une des revendications précédentes, caractérisé en ce que chaque patte (3) présente sensiblement la forme d'un S dont la partie arquée supérieure est intérieurement munie d'une nervure (11) et se prolonge extérieurement par au moins un doigt de guidage (12) s'étendant en vis-à-vis de la partie arquée inférieure du S.

7. Dispositif selon la revendication 6, caractérisé en ce que la nervure (11) d'une patte (3) comporte un bec (52) coopérant avec une encoche (53) dans la nervure (11) de l'autre patte (3).

8. Dispositif selon la revendication 1, 2, 4, 5, 6 ou 7, caractérisé en ce que chaque patte (3) se prolonge extérieurement par un doigt de guidage (12) comportant à son extrémité un retour en forme de crochet (50) constituant un point d'appui permettant auxdites pattes de prendre une position ouverte de verrouillage.

9. Dispositif selon la revendication 8, caractérisé en ce que les languettes arquées précitées (2) comportent chacune au niveau de leur articulation (7) sur l'embase (1) un crochet ou analogue (51) susceptible de coopérer avec le retour précité en forme de crochet (50) pour verrouiller les pattes (3) en position ouverte.

10. Dispositif selon l'une des revendications précédentes, caractérisé en ce que l'embase (1) comporte sur son côté opposé à celui portant les languettes arquées (2), les pattes (3) et l'élément précité (9), un ergot ou analogue (13) avec languettes de clippage (14).

11. Dispositif selon l'une des revendications précédentes, caractérisé en ce que l'embase (1) possède à l'état libre une forme arquée.

12. Dispositif selon la revendication 11, caractérisé en ce qu'à l'embase précitée est adjacente au moins une jupe d'étanchéité (54) tournée vers une extrémité ou l'autre du dispositif.

13. Application du dispositif selon l'une des revendications 1 à 12 à la fixation en aveugle d'une pièce (5) en forme de boîtier ou analogue sur un support (16).

14. Application du dispositif selon l'une des revendications 1 à 9 à l'obturation d'un orifice (4) sur une pièce quelconque.

## Patentansprüche

1. Eine ein Einzelstück bildende Befestigungs- oder Verschlußvorrichtung, das aus einer Fußfläche (1) besteht, auf der wenigstens zwei einander gegenüberliegende Befestigungsklemmen (3) artikuliert sind, die unter der Wirkung eines Drucks eine einander angenäherte oder entfernte Position mit Überschreitung eines toten Punktes zwischen diesen zwei Positionen einnehmen können, dadurch gekennzeichnet, daß jede Klemme (3) durch ein erstes Gelenk (6) mit einem bogenförmigen Anhängsel (2) verbunden ist, das seinerseits (7) auf der Fußplatte (1) artikuliert ist, und aus einem zweiten Gelenk (8) mit einem mit der Fußplatte (1) fest verbundenen Element (9).

2. Vorrichtung gemäß Anspruch 1, dadurch gekennzeichnet, daß das vorgenannte erste und das vorgenannte zweite Gelenk (6, 8) ein äußeres Ende (3a) jeder Klemme (3) jeweils mit dem äußeren Ende (2a) eines bogenförmigen Anhängsels (2) und mit einem äußeren Ende (9a) des vorgenannten Elements (9) verbinden, das sich zwischen den zwei bogenförmigen Anhängseln (2) erstreckt.

3. Vorrichtung gemäß Anspruch 1 oder 2, dadurch gekennzeichnet, daß das vorgenannte äußere Ende (2a) der bogenförmigen Anhängsel (2) ein nach außen aus der Vorrichtung vorstehendes Stück (10) umfaßt, um einen Stützpunkt zu bilden, der es den Klemmen (3) ermöglicht, eine jeweils voneinander entfernte oder offene Verriegelungsposition einzunehmen.

4. Vorrichtung gemäß Anspruch 1 bis 3, dadurch gekennzeichnet, daß die vorgenannten bogenförmigen Anhängsel (2) eine nach außen aus der Vorrichtung heraus gerichtete Konkavität aufweisen.

5. Vorrichtung gemäß einem der vorherigen Ansprüche, dadurch gekennzeichnet, daß das vorgenannte erste und zweite Gelenk (6, 8) ihren Ursprung an dem vorgenannten äußeren Ende (3a) der zwei Klemmen (3) haben, jeweils auf der einen (3b) und der anderen Seite (3c) jeder der Klemmen (3).

6. Vorrichtung gemäß einem der vorherigen Ansprüche, dadurch gekennzeichnet, daß jede Klemme (3) deutlich die Form eines S aufweist, dessen gebogener oberer Teil innen mit einer Rippe (11) versehen ist und sich nach außen durch wenigstens einen Führungsstift (12) verlängert, der sich gegenüber dem gebogenen unteren Teil des S erstreckt.

7. Vorrichtung gemäß Anspruch 6, dadurch gekennzeichnet, daß die Rippe (11) einer Klemme (3) eine Nase (52) umfaßt, die mit einer Kerbe (53) in der Rippe (11) der anderen Klemme (3) zusammenwirkt.

8. Vorrichtung gemäß Anspruch 1, 2, 4, 5, 6 oder 7, dadurch gekennzeichnet, daß jede Klemme (3) sich nach außen durch einen Führungsstift (12) verlängert, der an seinem äußeren Ende eine Rückkehr in Form eines Hakens (50) umfaßt, der einen Stützpunkt bildet, der es besagten Klemmen ermöglicht, einen offene Verriegelungsposition einzunehmen.

9. Vorrichtung gemäß Anspruch 8, dadurch gekennzeichnet, daß die vorgenannten bogenförmigen Anhängsel (2) jedes auf der Höhe ihrer Gelenke (7) auf der Fußplatte (1) einen Haken oder analoges Teil (51) umfassen, der / das geeignet ist, mit der vorgenannten Rückkehr in Form eines Hakens (50) zusammenzuwirken, um die Klemmen (3) in offener Position zu verriegeln.

10. Vorrichtung gemäß einem der vorherigen Ansprüche, dadurch gekennzeichnet, daß die Fußplatte (1) auf ihrer die bogenförmigen Anhängsel (2) tragenden gegenüberliegenden Seite die Klemmen (3) und das vorgenannte Element (9), einen Vorsprung oder analoges Teil (13) mit dem Clip-Anhängsel (14) umfaßt.

11. Vorrichtung gemäß einem der vorherigen Ansprüche, dadurch gekennzeichnet, daß die Fußplatte (1) in freiem Zustand eine bogenförmige Form hat.

12. Vorrichtung gemäß Anspruch 11, dadurch gekennzeichnet, daß die vorgenannte Fußplatte wenigstens einer zu einem äußeren Ende oder dem anderen äußeren Ende der Vorrichtung zugewandten Dichtungsschürze (54) anliegend ist.

13. Anwendung der Vorrichtung gemäß einem der Ansprüche 1 bis 12, auf die Blindbefestigung eines Werkstückes (5) in Form eines Gehäuses oder analoger Form auf einer Stützunterlage (16).

14. Anwendung der Vorrichtung gemäß Anspruch 1 bis 9 auf den Verschluß einer Öffnung (4) auf irgendeinem Werkstück.

## Claims

1. Automatic fastening or closing device that is formed by a single-part piece constituted by a base(1) on which at least two opposed fixation lugs (3) are articulated, which, under a pressure, may take an approximated or a spaced apart position with passage of the dead point between these two positions, characterized in that each lug (3) is connected by means of a first hinge (6) to an arcuate tongue (2) that is itself articulated (7) on the base (1), and by means of a second hinge (8) to a member (9) that is integral with the base (1).

2. Device according to claim 1, characterized in that said first and second hinges (6, 8) connect one end (3a) of each lug (3), respectively to one end (2a) of an arcuate tongue (2) and to one end (9a) of said element (9) which is extended between the two arcuate tongues (2).

3. Device according to claim 1 or 2, characterized in that said end (2a) of the arcuate tongues (2) comprises a part (10) that protrudes outside the device for forming a bearing point enabling the lugs (3) to take a spaced apart or locking open position.

4. Device according to one of claims 1 to 3, characterized in that said arcuate tongues (2) have a concavity that is turned to the outside of the device.

5. Device according to one of preceding claims, characterised in that said first and second hinges (6, 8) arise at said end (3a) of the two lugs (3) on one (3b) and the other face (3c) of each of the lugs (3), respectively.

6. Device according to one of the preceding claims, characterized in that each lug (3) has substantially the shape of a S the upper arcuate part of which is innerly provided with a rib (11) and is outerly extended by at least one guiding finger (12) that extends opposite to the lower arcuate part of the S.

7. Device according to claim 6, characterized in that the rib (11) of one lug (3) comprises a nose (52) cooperating with a notch (53) in the rib (11) of the other lug (3).

8. Device according to claims 1, 2, 4, 5, 6 or 7, characterized in that each lug (3) is outerly extended by a guiding finger (12) having its end provided with a hook shaped return (50) that forms a bearing point enabling said lugs to take a locking open position.

9. Device according to claim 8, characterized in that said arcuate lugs (2) each comprises, at their articulation (7) on the base (1) a hook or the like (51) able to co-operate with said hook shaped return (50) for locking the lugs (3) in open position.

10. Device according to one of the preceding claims, characterized in that the base (1) comprises a catch or the like (13) with clipping tongues (14) on the side of the base which is opposed to that bearing the arcuate lugs (12), the lugs (3) and said element (9),.

11. Device according to one of the preceding claims, characterized in that the base (1) has an arcuate shape at the free state thereof.

12. Device according to claim 11, characterised in that said base is adjacent to at least one seal tightness skirt (54) that is turned to one or the other end of the device.

13. Application of the device according to one of claims 1 to 12 to the blindly fixation of a casing shaped piece (5) or the like on a support (16).

14. Application of the device according to one of claims 1 to 9 to the closing of a hole (4) on any piece.
